# EUROPEAN PATENT SPECIFICATION

(11) **EP 0 233 933 B1**
(45) Date of publication and mention of the grant of the patent: **15.11.1995**
(21) Application number: 86905499.9
(22) Date of filing: 08.08.1986
(51) Int. Cl.: F01D 15/06, F01D 1/04, A47L 9/04

(54) **FLUID POWER TRAIN FOR SMALL APPLIANCES**
SYSTEM ZUR LEISTUNGSÜBERTRAGUNG MITTELS FLUID FÜR KLEINGERÄTE
SYSTEME DE TRANSMISSION PAR FLUIDE POUR PETITS APPAREILS

(30) Priority: 09.08.1985 US 764838
(43) Date of publication of application: 02.09.1987
(73) Proprietor: THE SCOTT FETZER COMPANY, Westlake Ohio 44145 (US)
(72) Inventor: PRAHL, Joseph, M., East Cleveland, OH 44112 (US); KOCHTE, Werner, W., Ravenna, OH 44266 (US)
(74) Representative: Allam, Peter Clerk
(86) International application number: PCT/US86/01648
(87) International publication number: WO 87/00895

(56) References cited:
- EP-A- 0 021 435
- US-A- 2 672 281
- US-A- 2 703 904
- US-A- 4 544 702
- THE POWER HANDBOOK, 2nd edition, 1983, pages 70-72, New York, US; "How fanswork"
- SOVIET ENGINEERING RESEARCH, vol. 7, no. 1, January 1987, pages 28,29, MeltonMowbray, Leicestershire, GB; I.V. KOTLYAR et al.: "Selecting turbodriveparameters for pneumatic grinding machines to suit the hydrauliccharacteristics of the supply system"

## Description

This invention relates to a pump and turbine motor set (which may also be referred to as a fluid power train) operating in the so-called incompressible domain. (Although "incompressible domain" is a recognized term of art, it is somewhat misleading since the domain referred to is one in which no significant degree of fluid compression in fact occurs rather than a domain in which the fluid is essentially incompressible. As is well known in devices that operate in the incompressible domain, even highly compressible fluids such as air remain essentially uncompressed because the fluid flowing through the system experiences a pressure variation whose amplitude is small as compared to the fluid's average absolute pressure).

More particularly, the invention finds application to pump driven, impulse turbine appliances of the general type which typically operate in the incompressible domain, and wherein typically the output pressure and flow of the pump are inversely interdependent, such as vacuum powered turbine motor tools or appliances. The invention will be described in connection with powering of a turbine-driven brush as an accessory to a vacuum cleaner.

The invention also relates to a turbine motor attachment mountable to a vacuum cleaning apparatus.

It is generally known to provide a pump and turbine motor set of the kind operating in the incompressible domain in which the pump is located in a housing having an inlet communicating with the pump and in which a turbine motor assembly is coupled to said inlet in an air flow path that extends through the turbine motor and through said housing inlet to said pump, and wherein the pump has a pressure/flow characteristic in which pressure and flow are generally inversely related and at which maximum output power is generated by the pump at an air flow value intermediate the values obtained when said inlet is entirely obstructed (zero air flow) and entirely unobstructed (maximum airflow) respectively.

Vacuum powered turbine motor tools or appliances of the foregoing general type are known for example from U.S. Patents 3,909,875 to Rother et al., 4,305,176 to Lessig et al. and 4,414,782 to Langenberg. These appliances are driven with air flow induced by conventional vacuum cleaner plants found, for example, in homes, work shops and the like. In general, these appliances operate at a relatively low power level and, consequently, offer limited performance. An underlying cause of this limited power in these tools is the capacity of the vacuum motor or pump. Conventional vacuum pumps are designed primarily, if not exclusively, to produce a suction air flow to entrain dirt or dust particles at the mouth of a suction nozzle. Ordinarily the power level required to accomplish simple suction cleaning is met by a particular vacuum pump fan design without significant reserve power capacity. Typically, the air stream energy produced by the vacuum pump, while adequate for for suction cleaning, may be marginal when compared to that required to adequately power a turbine tool. In general, prior art turbine motor appliances, when operated in their intended systems, produce only a fraction of the maximum power output available from the vacuum pump. Since, as mentioned, the maximum fluid power of the typical vacuum cleaning system is limited, a tool utilizing less than this full power is severely handicapped in its work performing capacity.

EP-A-0 021 435 also describes a pump and turbine motor set for driving small power tools and in which the pump specifically described is a vacuum cleaner motor. The specification is concerned with improvements in the design of the turbine rotor and particularly the blades or buckets of the rotor.

According to one aspect of the present invention a pump and turbine motor set of the kind defined above is characterised in that said turbine motor assembly includes a portion of restricted cross-section located in said air flow path at an inlet of said turbine motor assembly, said portion being of an effective cross-section which is selected to match said pressure/flow characteristic of said pump so as to establish the operating point of said pump to be substantially that at which maximum power output is generated by the pump.

In another aspect of the present invention there is provided a turbine motor attachment mountable to a vacuum cleaning apparatus having an inlet orifice for an air flow path extending through the turbine motor and the pump provided by the vacuum cleaning apparatus when the turbine motor is mounted to the vacuum cleaning apparatus,
characterised in that,
the inlet orifice is of adjustable area to enable the air flow rate through the pump to be controlled to a value that corresponds to the maximum air flow power delivery of the pump.

The invention will be described in its application to developing a high power level in a pump driven, impulse turbine device such as a tool powered from a vacuum cleaner. As stated, the output pressure and flow of the pump in such systems are inversely interdependent. In accordance with the teaching of the invention, the turbine geometry is matched to the pressure/flow characteristics of the pump driving it. More specifically, the turbine inlet area is of a size which constrains pump operation to a region where the product of pump flow and pressure is optimized for high power output.

An example of a pump having an inversely interdependent pressure/flow characteristic is a vacuum cleaner plant ordinarily used for household cleaning. The vacuum fan or pump typically produces maximum pressure at zero flow and zero pressure at maximum flow. Between these limits the pressure and flow are typically inversely related so that from some reference operating point an increase in flow will result in a decrease in pressure and vice versa. Maximum pump output power is normally produced at an operating point somewhere between these extremes of pressure and flow.

Such a pump and a turbine driven thereby operate in the incompressible domain because the maximum suction pressure of the vacuum cleaner plant is small as compared to atmospheric pressure.

A conventional ASTM test can be performed on such a vacuum motor or pump to determine its output power as a function of air flow. This test involves experimental measurement of power at a plurality of flow rates and data derived therefrom can be used to plot a curve of power versus flow rate. Different flow rates are generated by substituting apertures of different areas at the upstream end of the vacuum pump flow path. This plotted curve and another plotting power versus pump flow area reveal a maximum pump output power, a flow rate corresponding to this maximum power output and an optimum pump flow area producing this flow and power.

As suggested above, an impulse turbine power tool driven by air pumped by a vacuum cleaner power plant, in accordance with the invention, has an inlet flow path area at the turbine wheel matched to the optimum pump flow area. The disclosed matched relationship between the turbine inlet flow path area and the vacuum motor unit is applicable to various types and styles of impulse turbine designs. A correction factor can be used to upwardly size the turbine inlet flow path area where guide vanes or other factors hinder inlet flow from that of an unobstructed flow path area. In this case the effective area of the actual turbine inlet flow path is substantially equal to the pump optimum flow area.

Where power falls off only gradually from a maximum value with increasing flow, the turbine inlet flow path area can be increased from a true optimized area without a significant loss in maximum power, in order to reduce the risk of such area being fouled by debris. This limited oversizing of the turbine inlet area can be advantageous when a turbine is exposed to dirty air as in a vacuum sweeper tool or power sander.

In one illustrated embodiment, the turbine motor is provided in a vacuum brush appliance. The appliance is attached to the end of a conventional flexible hose coupled to a vacuum motor. The vacuum brush appliance is hand held to clean above-floor surfaces as well as stair threads and carpet areas requiring special attention.

### BRIEF DESCRIPTION OF THE DRAWINGS

FIG. 1 is a diagrammatic perspective view of a fluid power drive train in the form of an impulse turbine vacuum brush appliance driven by a domestic vacuum cleaner power plant;
FIG. 2 is a graph plotting output pressure versus output flow of the vacuum cleaner power plant;
FIG. 3 is a graph plotting output power versus flow of the vacuum cleaner power plant;
FIG. 4 is a graph plotting output power versus pump flow path area for the vacuum cleaner power plant;
FIG. 5 is a diagrammatic perspective view of the impulse turbine vacuum brush appliance of FIG. 1 on an enlarged scale; and
FIG. 6 is a diagrammatic perspective view of an impulse turbine of a style different from that of FIG. 5.

### DESCRIPTION OF THE PREFERRED EMBODIMENTS

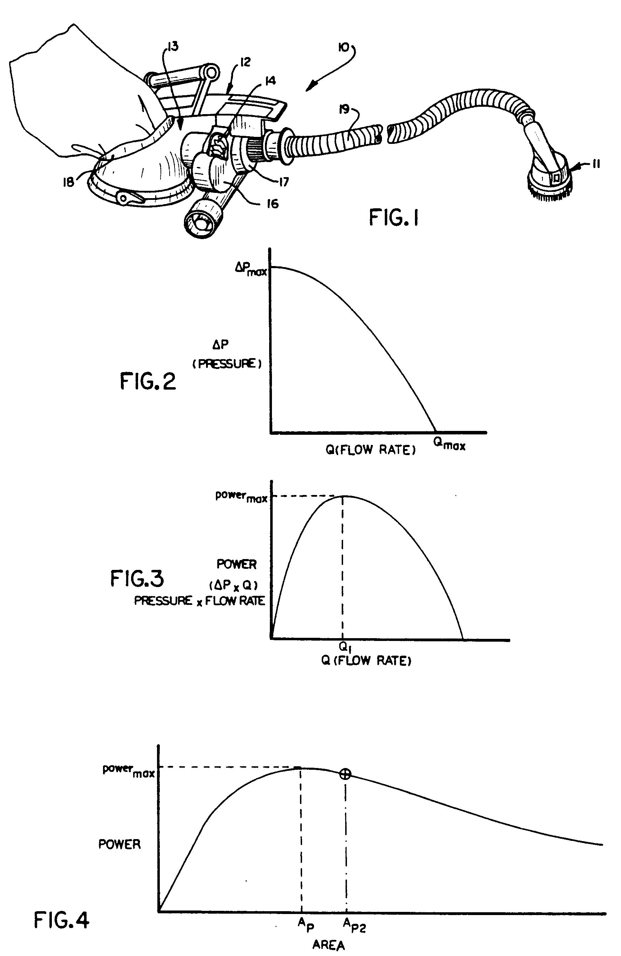

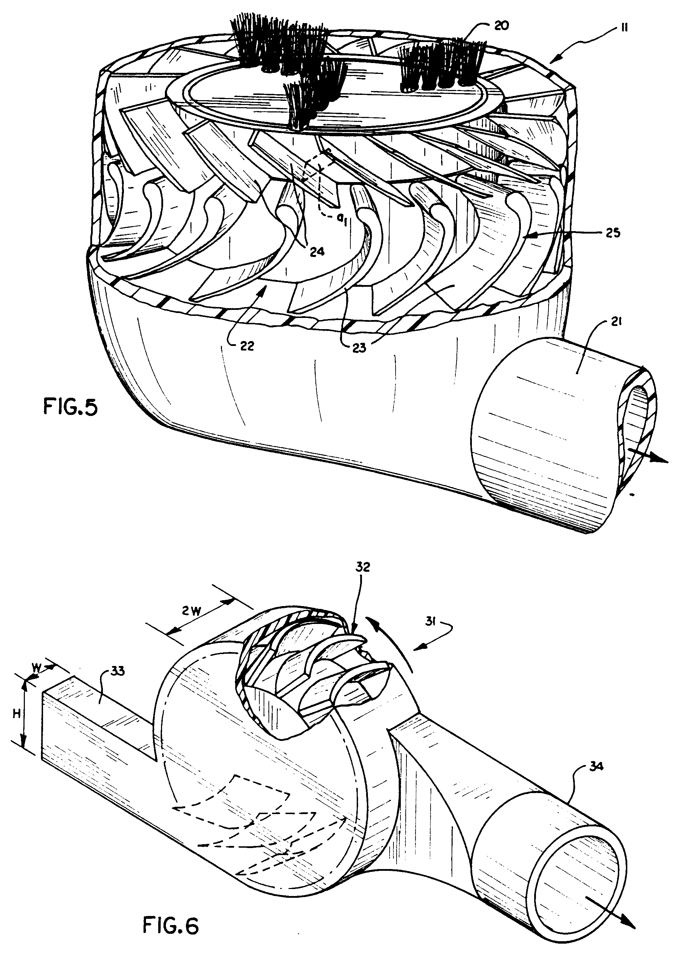

Referring now to FIG. 1, there is shown an example of a fluid power system 10 comprising a vacuum brush 11 driven with air flow developed by a vacuum cleaner plant 12. The vacuum cleaner plant 12 is a generally conventional unit which is convertible between an upright floor cleaner and the illustrated portable unit where a front nozzle housing (not shown) is removed. The vacuum cleaner plant 12 includes an electrical motor 13 and a fan 14 driven by the motor operating in a housing 16. When operating, the motor 13 and fan 14, working as a pump, draw air in an inlet 17 and discharge it through an outlet 18. A conventional flexible vacuum hose 19 is coupled at one end to the inlet 17 and at the other end to a tubular handle 21 of the vacuum brush 11. The illustrated vacuum brush 11 represents a unit disclosed in U.S. Patent Application Serial No. 639,956, filed August 10, 1984 the disclosure of which is incorporated herein by reference. This vacuum brush 11 includes an impulse turbine motor drive 22 (FIG. 5) having a rotary brush 20 as its load.

It can be generally shown analytically that an air turbine motor, when operated by air flow produced by a conventional vacuum cleaner power plant such as that used in household cleaning, is most effective when the turbine wheel is of the impulse type.

A characteristic relationship between the output pressure ΔP and the output flow Q of the vacuum unit 12 is illustrated in FIG. 2. Pressure ΔP is the pressure differential below atmospheric pressure reached by the vacuum unit 12. Q is the flow rate of air (e.g. cubic feet per minute) pumped by the vacuum unit 12. As shown in FIG. 2, the pressure ΔP and flow Q of the vacuum unit 12 are inversely interdependent upon one another, i.e., the pressure/flow curve of FIG. 2 is monotonic.

FIG. 3 illustrates the output power of the vacuum unit 12 as a function of the flow rate Q of air pumped by the unit. Output power of the vacuum unit 12 is the product of ΔP times the flow rate Q through the pump. The vacuum pressure of air in the vacuum unit is, for example, in the order of 33 inches H₂O, and, consequently, the air flow can be considered to be incompressible.

The pressure versus flow and power versus flow relationships illustrated in FIGS. 2 and 3 as well as a power versus area relationship depicted in FIG. 4 and discussed later can be experimentally determined by testing the vacuum unit 12 on an ASTM standard plenum chamber used to measure vacuum cleaner performance. (ASTM Standard 1982, Vol. 46F 431-79, Standard Performance Measurement Plenum Chamber for Vacuum Cleaners, pages 654-660; ASTM Standard 1982, Vol. 46F 558-78a, Standard Method for Measuring Air Performance Characteristics of Vacuum Cleaners, pages 906-927). The vacuum unit 12 is connected to the plenum chamber through the standard flexible hose 19 so that the measured characteristics of the vacuum unit 12 account for the presence of this hose. An orifice area, opening the plenum to the hose 19, is varied in a sufficient number of increments to produce data for accurately plotting the curves of FIGS. 2 through 4. The plenum aperture areas used in the ASTM plenum chamber are converted to pump flow area for the vacuum unit 12 (inter alia, for the abcissa values in FIG. 4) by multiplying such aperture areas by the coefficient 0.6 to account for vena contracts effects associated with the sharp edges of the plenum apertures.

Study of FIG. 3 reveals that the output power of the vacuum unit 12 reaches a maximum at an intermediate flow rate Q₁ i.e. at a flow greater than zero and less than the maximum flow rate produced by the vacuum unit. At this operating point of Q₁, the kinetic energy per unit time in the fluid stream produced by the vacuum unit is maximized. In FIG. 4, developed experimentally, the output power of the vacuum unit 12 is shown as a function of pump flow area A (derived from ASTM plenum aperture area data). Area A₁ in FIG. 4 represents the area which constrains vacuum unit air flow to Q₁ (i.e. the flow rate at maximum power output indicated in FIG. 3).

The turbine motor 22 of the vacuum brush 11 is matched to the pressure/flow characteristics of the vacuum unit 12 in a manner whereby the vacuum unit is constrained to operate under pressure and flow conditions corresponding to the region of maximum vacuum unit power output. In particular, the vacuum brush turbine motor 22 is arranged to induce the vacuum unit 12 to develop a flow rate equal to Q₁. With the vacuum unit 12 producing its maximum power output, powering of the turbine 22 is maximized.

This matching or tuning of the vacuum brush turbine 22 is accomplished by determining an effective total air inlet flow path area Aₑ₁ that is equal to the pump flow area Aₚ, and upsizing Aₑ₁ to an actual total area Aₐ₁ of the inlet flow path to the turbine blades, designated 23. The actual turbine inlet flow path area is measured normal to the fluid flow direction to the impulse turbine blades 23. With reference to FIG. 5, the impulse turbine motor 22 includes a series of stationary inlet guide vanes 24 which are symmetrically arranged in a circular pattern adjacent the path of the rotating impeller blades 23. In this instance, the actual total inlet flow path area Aₐ₁ of the turbine motor 22 is the sum of the individual passage areas a₁ (indicated in FIG. 5) bounded by adjacent pairs of the inlet guide vanes 24. The guide vanes 24 produce a desired flow direction of air to the rotor blades 23.

Upsizing from the effective inlet flow path area Aₑ₁ to the actual area Aₐ₁ is required where the inlet includes guide vanes, as in the embodiment of FIG. 5, or where other factors are present which restrict free fluid flow. This correction factor is $\sqrt{{\text{1 + K}}_{\text{E}}}$ where the constant K_{E} is a friction coefficient that can be estimated by analytical methods and/or by experimentation.

Where the inlet includes no guide vanes and no other flow restricting factors are present, no correction factor is required and Aₐ₁ = Aₑ₁ = Aₚ.

Where the power of the vacuum unit 12, as illustrated in FIG. 4, does not decrease appreciably from its maximum Power _{max.} with moderate increases in area A from Aₚ, an increased actual area Aₐ₂ greater than Aₐ₁ can be used for sizing the total flow path area of the inlet to the turbine motor 22. This oversizing to Aₐ₂ can be desirable where the turbine motor is drawing in dirty air as in a vacuum brush application and there is a risk that the inlet area could be fouled by debris.

By way of example, one fluid power system represented by FIGS. 1-5 had the following approximate properties:${\text{Δ P}}_{\text{max}} \text{= 34 in H₂O}$${\text{Q}}_{\text{max}} \text{= 90 cfm}$${\text{K}}_{\text{E}} \text{= 1.2}$${\text{Actual area A}}_{\text{a1}} \text{= .58 in²}$${\text{Actual area A}}_{\text{a2}} \text{= .86 in²}$

Referring now to FIG. 6, there is schematically shown an impulse turbine motor 31 which differs, from that of FIG. 5. In this embodiment, air enters the turbine 32 in a path generally tangential to the turbine and in a direction generally transverse to the axis of rotation of the turbine or impeller rotor. The turbine motor 31 schematically represents the type of unit disclosed, for example, in aforementioned U.S. Patent 4,305,176. The total inlet flow path area is formed by a channel diagrammatically represented at 33. The channel 33 directs or guides air generally tangentially to the impeller rotor 32 at a zone which is a relatively small fraction of the periphery of the rotor. FIG. 5 illustrates a simplified case where the inlet flow path channel 33 is rectangular so that its area is the product of its width W times its height H.

In accordance with the present invention, the dimensions of the inlet channel 33 normal to the flow path are arranged to produce an effective area substantially equal to Aₚ determined for the vacuum unit 12. Where the impulse turbine motor 31 exhibits a characteristic power curve like that illustrated in FIG. 4 and the motor is drawing dirty air, the effective total area used for the inlet channel 33 can be an area, Aₑ₂, corresponding to Aₚ₂ in FIG. 4, and such area Aₑ₂ is up-sized by the flow correction factor $\sqrt{{\text{1 + K}}_{\text{E}}}$ where appropriate to an actual total inlet area Aₐ₂. Air is discharged through the vacuum unit 12 from an outlet of the turbine motor 31 shown schematically at 34.

It is contemplated that a manufacturer practicing the present invention can produce a "universal" impulse turbine appliance for use with a variety of vacuum power plants, each with inversely interdependent but different pressure/flow characteristics. The motor, housing, impeller rotor and the like of the turbine motor can be essentially the same and only the inlet flow path area need be changed to suit a particular vacuum cleaner plant. The area can be determined at the time of manufacture or can be set by the ultimate consumer by substituting, altering, adjusting or otherwise modifying elements in the flow path area.

The above described principles are applicable to systems operating at above atmospheric pressure such as where an impulse turbine is driven by positive pressure.

## Claims

1. A pump and turbine motor set operating in the incompressible domain in which the pump (14) is located in a housing (16) having an inlet (17) communicating with the pump and in which a turbine motor assembly is coupled to said inlet in an air flow path that extends through the turbine motor and through said housing inlet to said pump, and wherein the pump (14) has a pressure/flow characteristic in which pressure and flow are generally inversely related and at which maximum output power is generated by the pump at an air flow value intermediate the values obtained when said inlet is entirely obstructed (zero air flow) and entirely unobstructed (maximum airflow) respectively, characterised in that said turbine motor assembly includes a portion (24: 33) of restricted cross-section located in said air flow path at an inlet of said turbine motor assembly, said portion being of an effective cross-section which is selected to match said pressure/flow characteristic of said pump (14) so as to establish the operating point of said pump (14) to be substantially that at which maximum power output is generated by the pump (14).

2. A pump and turbine motor set as claimed in Claim 1 in which said portion of restricted cross-section precedes the turbine of said turbine motor assembly in said air flow path.

3. A pump and turbine motor set as claimed in Claim 2 in which said turbine motor assembly has an axial-flow rotor and said portion of the turbine motor assembly comprises a set of fixed vanes (24) guiding the flow of air to the blades of the rotor.

4. A pump and turbine motor set as claimed in Claim 2 in which said turbine motor assembly has a tangential-flow rotor and said portion of the turbine motor assembly comprises an inlet nozzle (33) directing air flow to the rotor blades.

5. A pump and turbine motor set as claimed in any preceding claim in which the turbine is an impulse turbine.

6. A pump and turbine motor set as claimed in Claim 4 in which said turbine motor assembly (31) comprises a single flow passage (33) for directing fluid from said inlet nozzle tangentially to a relatively small fraction of the periphery of the rotor (32).

7. A pump and motor set as claimed in any preceding claim in which said pump is provided by a vacuum cleaning apparatus to which the turbine motor assembly is detachably mounted.

8. A pump and turbine motor set as claimed in any preceding claim in which said turbine motor has a rotary brush (20) mounted to rotate therewith.

9. A turbine motor attachment mountable to a vacuum cleaning apparatus having an inlet orifice for an air flow path extending through the turbine motor and the pump provided by the vacuum cleaning apparatus when the turbine motor is mounted to the vacuum cleaning apparatus, characterised in that,
the inlet orifice is of adjustable area to enable the air flow rate through the pump to be controlled to a value that corresponds to the maximum air flow power delivery of the pump.

## Patentansprüche

1. Eine Pumpen- und Turbinenmotoreinheit, die in einem inkompressiblen Bereich arbeitet, in der die Pumpe (14) in einem Gehäuse (16) mit einem mit der Pumpe verbundenen Einlaß (17) angeordnet ist und in der eine Turbinenmotoranordnung mit der Einlaßöffnung in einer Luftstrombahn verbunden ist, die durch den Turbinenmotor und durch die Gehäuseeinlaßöffnung zu der Pumpe führt und worin die Pumpe (14) ein Druck-/Strömungsmerkmal aufweist, in dem Druck und Strömung im allgemeinen entgegengesetzt zueinander sind und bei dem die maximale Abgabeleistung von der Pumpe bei einem Luftstromwert erzeugt wird, der zwischen den Werten liegt, die erreicht werden, wenn die Einlaßöffnung vollständig verschlossen (kein Luftstrom) bzw. vollständig frei (maximaler Luftstrom) ist, dadurch gekennzeichnet, daß die Turbinenmotoranordnung einen Abschnitt (24 : 33) eines begrenzten Querschnitts in der Luftstrombahn an einer Einlaßöffnung der Turbinenmotoranordnung aufweist, wobei dieser Abschnitt einen wirksamen Querschnitt hat, der so ausgewählt ist, um dem Druck-/Strömungsmerkmal der Pumpe (14) zu entsprechen, so daß der Arbeitspunkt der Pumpe (14) im wesentlichen der ist, bei dem eine maximale Leistungsabgabe von der Pumpe (14) erzeugt wird.

2. Eine Pumpen- und Turbinenmotoreinheit nach Anspruch 1, dadurch gekennzeichnet, daß der Abschnitt des begrenzten Querschnitts vor der Turbine der Turbinenmotoranordnung in der Luftstrombahn liegt.

3. Eine Pumpen- und Turbinenmotoreinheit nach Anspruch 2, dadurch gekennzeichnet, daß die Turbinenmotoranordnung einen Axialrotor aufweist und der Abschnitt der Turbinenmotoranordnung einen Satz feststehender Schaufeln (24) enthält, die den Luftstrom zu den Schaufeln des Rotors leiten.

4. Eine Pumpen- und Turbinenmotoreinheit nach Anspruch 2, dadurch gekennzeichnet, daß die Turbinenmotoranordnung einen Tangentialrotor aufweist und der Abschnitt der Turbinenmotoranordnung eine Einlaßdüse (33) enthält, die den Luftstrom zu den Rotorschaufeln leitet.

5. Eine Pumpen- und Turbinenmotoreinheit nach einem der obigen Ansprüche, dadurch gekennzeichnet, daß die Turbine eine Gleichdruckturbine ist.

6. Eine Pumpen- und Turbinenmotoreinheit nach Anspruch 4, dadurch gekennzeichnet, daß die Turbinenmotoranordnung (31) einen einflutigen Durchlaß (33) zum Leiten des Fluids aus der Einlaßdüse tangential zu einem relativ kleinen Bruchteil der Rotorperipherie (32) aufweist.

7. Eine Pumpen- und Turbinenmotoreinheit nach einem der obigen Ansprüche, dadurch gekennzeichnet, daß die Pumpe mit einer Staubsaugereinheit versehen ist, an der die Turbinenmotoranordnung abnehmbar befestigt ist.

8. Eine Pumpen- und Turbinenmotoreinheit nach einem der obigen Ansprüche. dadurch gekennzeichnet, daß der Turbinenmotor eine daran befestigte Drehbürste (20) aufweist.

9. Eine Turbinenmotorbefestigung, die an einer Staubsaugereinheit angebracht werden kann, die mit einer Einlaßöffnung für eine Luftstrombahn versehen ist, die durch den Turbinenmotor und die Pumpe des Staubsaugers führt, wenn der Turbinenmotor an der Staubsaugereinheit befestigt ist, dadurch gekennzeichnet, daß die Einlaßöffnung ein regulierbarer Bereich ist, um die Luftströmungsgeschwindigkeit durch die Pumpe auf einen Wert zu bringen, der der maximalen Luftstromleistungsmenge der Pumpe entspricht.

## Revendications

1. Ensemble de pompe et de moteur à turbine fonctionnant dans le domaine incompressible dans lequel la pompe (14) est située dans un carter (16) ayant un tuyau d'admission (17) communicant avec la pompe et dans lequel un ensemble moteur à turbine est couplé avec le tuyau dans un circuit d'écoulement d'air qui circule au travers du moteur à turbine et au travers du tuyau d'admission du carter vers la pompe, et dans lequel la pompe (14) a une caractéristique de pression/débit dans laquelle la pression et le débit sont en général inversement proportionnels et dans lequel la puissance de sortie maximale est produite par la pompe à une valeur de débit intermédiaire entre les valeurs obtenues respectivement lorsque ledit tuyau d'admission est entièrement obstrué (débit de l'air nul) et lorsqu'il est entièrement ouvert (débit de l'air maximum), caractérisé en ce que ledit ensemble moteur à turbine comporte une partie (24-33) à section transversale réduite située dans le circuit d'écoulement d'air à un tuyau d'admission de l'ensemble moteur à turbine, la partie ayant une section transversale efficace qui est sélectionnée pour s'adapter à la pression/écoulement caractéristique de la pompe (14) de façon à ce que le point de fonctionnement dynamique de la pompe (14) soit sensiblement celui où la puissance de sortie maximale est produite par la pompe (14).

2. Ensemble de pompe et de moteur à turbine selon la revendication 1 dans lequel la partie de la section transversale précède la turbine de l'ensemble moteur à turbine dans le circuit d'écoulement d'air.

3. Ensemble de pompe et de moteur à turbine selon la revendication 2 dans lequel l'ensemble moteur à turbine possède un rotor dans l'axe d'écoulement d'air et la partie de l'ensemble moteur à turbine comprend un jeu d'ailettes fixes (24) guidant l'écoulement de l'air vers les aubes du rotor.

4. Ensemble de pompe et de moteur à turbine selon la revendication 2 dans lequel l'ensemble moteur à turbine possède un rotor tangentiel à l'écoulement et ladite portion de l'ensemble moteur à turbine comprend une buse d'admission (33) dirigeant l'écoulement de l'air vers les aubes du rotor.

5. Ensemble de pompe et de moteur à turbine selon l'une quelconque des revendications précédentes dans lequel la turbine est une turbine à impulsion.

6. Ensemble de pompe et de moteur à turbine selon la revendication 4 dans lequel l'ensemble moteur à turbine (31) comprend un passage d'écoulement simple (33) pour diriger le fluide de la buse d'admission tangentiellement vers une fraction relativement petite de la périphérie du moteur (32).

7. Ensemble de pompe et de moteur selon l'une quelconque des revendications précédentes dans lequel la pompe est munie d'un appareil de nettoyage par aspiration monté de manière amovible sur l'ensemble moteur à turbine.

8. Ensemble de pompe et de moteur à turbine selon l'une quelconque des revendications précédentes dans lequel le moteur à turbine possède un balai rotatif (20) monté pour tourner avec lui.

9. Accessoire de moteur à turbine adaptable à un appareil de nettoyage par aspiration possédant un orifice d'admission pour un circuit d'écoulement d'air s'étendant au travers du moteur à turbine et de la pompe munie de l'appareil de nettoyage par aspiration quand le moteur à turbine est monté sur cet appareil, caractérisé en ce que l'orifice d'admission peut etre ajusté pour permettre au débit d'écoulement d'air au travers de la pompe d'être contrôlé à une valeur correspondant au débit d'air maximal libérable par la pompe.
